# EUROPEAN PATENT APPLICATION

(11) **EP 1 930 116 A2**
(43) Date of publication of application: **11.06.2008**
(21) Application number: 07254567.6
(22) Date of filing: 23.11.2007
(51) Int. Cl.: B23K 35/02, F01D 5/00, B23P 6/04

(54) **Method of diffusion brazing with nonoparticle alloys**

(30) Priority: 07.12.2006 SG 200608502; 14.02.2007 US 706107
(71) Applicant: Turbine Overhaul Services Private Limited, Jurong Town, Singapore 638639 (SG)
(72) Inventor: NG, Sor Tin, Toa Payoh Lorong 5, 310043 (SG); Luah, Kok Hai, Jurong West St 42, 640552 (SG)
(74) Representative: Leckey, David Herbert

(57) **Abstract**

A method of repairing a metal component (20) comprising depositing a nanoparticle alloy (28) within a crack (24) of the metal component, depositing a filler alloy (30) over the deposited nanoparticle alloy (28), and diffusion brazing the metal component (20).
Preferably the alloys are nickel or cobalt based superalloys for gas turbine components.

## Description

### BACKGROUND

The present invention relates to the repair of metal components. In particular, the present invention relates to diffusion brazing techniques for repairing metal components with the use of nanoparticle alloys.

Gas turbine engine components are exposed to extreme temperatures and pressures during the course of operation. As such, these engine components typically employ high-strength alloys (e.g., superalloys) to preserve the integrity of the components over the course of operation. However, over time, the engine components typically develop cracks on the component surfaces and/or interior regions, which require repairs.

Engine cracks are typically repaired with brazing operations. For large cracks (e.g., gap widths greater than about 250 micrometers), the brazing operations result in athermal solidifications, which reduce the mechanical properties of the components at the brazing locations. One technique for obtaining the isothermal (i.e., non-athermal) solidifications involves brazing the engine components at high temperatures. However, the high temperatures reduce the mechanical properties of the engine component alloys (e.g., gamma-prime phase coarsening). As such, there is a need for a repair process that is suitable for fixing large cracks in engine components, and that also preserves the mechanical properties of the components.

### SUMMARY

The present invention relates to a method of repairing a metal component having a crack. The method in one aspect includes depositing a nanoparticle alloy within the crack, depositing a filler alloy over the deposited nanoparticle alloy, and diffusion brazing the metal component.

### BRIEF DESCRIPTION OF THE DRAWINGS

FIG. 1 is a flow diagram of a method for diffusion brazing a crack in a metal component with the use of a nanoparticle alloy and a filler alloy.
FIGS. 2-5 are diagrams showing a metal component having a crack that is repaired pursuant to the diffusion brazing method.
FIG. 6 is a micrograph of a comparative brazed metal component, which does not include a nanoparticle alloy.
FIG. 7 is a micrograph of a brazed metal component of the present invention, which was brazed with a nanoparticle nickel-based alloy provided as a powder.
FIG. 8 is a micrograph of a brazed metal component of the present invention, which was brazed with a nanoparticle nickel-based alloy provided as a nanofoil.

### DETAILED DESCRIPTION

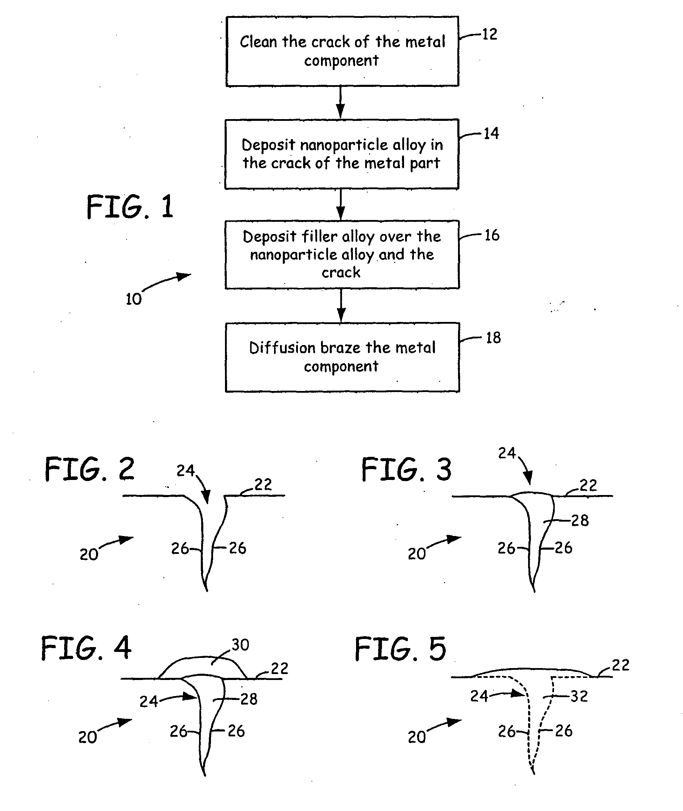

FIG. 1 is flow diagram of method 10 for brazing a crack in a metal component with the use of a nanoparticle alloy and a filler alloy. Method 10 includes steps 12-18 and initially involves cleaning the crack to remove any oxide residue (step 12). As discussed above, during operation, gas turbine engine components are exposed to extreme temperatures. Operating at such high temperatures in an oxygen-containing atmosphere results in the formation of an oxide layer on the surface of the component and the interior walls of any crack which may form. Such oxide layers effectively function as diffusion barriers, thereby preventing the nanoparticle alloy from bonding to the walls of the crack. The oxide layer may be removed by cleaning the metal component, particularly the walls of the crack, with hydrogen fluoride gas. The cleaning process is desirably continued for a sufficient duration to at least substantially remove the oxide layer from the walls of the crack.

A nanoparticle alloy is then deposited into the crack (step 14). The nanoparticle alloy is an alloy containing nickel and/or cobalt, and may also include one or more additional metals such as titanium, chromium, niobium, hafnium, tantalum, molybdenum, tungsten, aluminum, and iron. Particularly suitable alloys for the nanoparticle alloy include nickel-based alloys, nickel-based superalloys, cobalt-based alloys, cobalt-based superalloys, and combinations thereof. The nanoparticle alloy has a nanometer-scale average particle size, which allows the alloy to provide isothermal solidification of large cracks at low brazing temperatures. Examples of suitable average particle sizes for the nanoparticle alloy include average particle sizes of about 500 nanometers or less, with particularly suitable average particle sizes ranging from about 10 nanometers to about 200 nanometers. In one embodiment, the nanoparticle alloy is substantially free of particles having particles sizes greater than about 500 nanometers.

The nanoparticle alloy may be provided as a variety of media, such as powders, nanofoils, pastes, and slurries. The nanoparticle alloy may be deposited with a variety of techniques, such as by manual filling, or with deposition systems, extrusion systems, and injection systems. The amount of the nanoparticle alloy deposited into the crack is desirably enough to fill at least a majority of the crack. Preferably, enough of the nanoparticle alloy is deposited into the crack to at least substantially fill the crack.

Once the nanoparticle alloy is deposited in the crack, a filler alloy is then deposited over the deposited nanoparticle alloy and the crack (step 16). The filler alloy desirably has a composition that is substantially the same or similar to the alloy of the metal component (e.g., nickel-based alloys, nickel-based superalloys, cobalt-based alloys, and cobalt-based superalloys). The filler alloy is beneficial for preserving the strength of the metal component after the brazing operation. Because the filler alloy is at least similar to the metal component alloy, the filler alloy typically has a micrometer-scale average particle size. The filler alloy may be provided as a variety of media, such as powders, pastes, and slurries. The filler alloy may be deposited over the nanoparticle alloy with a variety of techniques, such as by manual coating, or with deposition systems, extrusion systems, and coating systems.

After the nanoparticle alloy and the filler alloy are deposited, the metal component is then subjected to a diffusion brazing cycle (step 18). This involves heating the metal component under reduced pressure to melt the nanoparticle alloy and the filler alloy. The particles of the nanoparticle alloy have greater surface area-to-volume ratios compared to the larger particles of the filler alloy and the alloy of the metal component. This increases heat distribution within the nanoparticle alloy, which accordingly increases the nanoparticle alloy melt rate. As a result, the nanoparticle alloy reduces the amount of temperature depressant materials (i.e., larger particles) used to seal the crack, thereby allowing lower brazing temperatures to be used. This accordingly preserves the mechanical properties of the metal component.

Examples of suitable heating temperatures for the diffusion cycle range from about 980°C (about 1800°F) to about 1260°C (about 2300°F), with particularly suitable heating temperatures ranging from about 1150°C (about 2100°F) to about 1260°C (about 2300°F). Examples of suitable reduced pressures for the diffusion cycle include about 1 Torr or less, with particularly suitable pressures including about 0.001 Torr or less. Suitable brazing periods range from about 10 minutes to about 2 hours. One skilled in the art will understand that these exemplary parameters can be varied to suit the nanoparticle alloys, the filler alloys, and the component alloys being repaired.

During the diffusion brazing cycle, the filler alloy diffuses into the nanoparticle alloy and into the walls of the crack. Similarly, the nanoparticle alloy also diffuses into the walls of the crack. After the diffusion brazing is completed, the metal component is desirably cooled at a rapid rate (e.g., about 40°C-60°C per minute). As the metal component cools, the alloys isothermally solidify, providing a uniform seal that preserves the mechanical properties of the metal component at the location of the sealed crack.

FIGS. 2-5 are diagrams that illustrate a metal component (referred to as metal component 20) being repaired pursuant to method 10 (shown in FIG. 1). As shown in FIG. 2, metal component 20 includes surface 22 and crack 24, where crack 24 includes walls 26. Metal component 20 may be any type of metal component, such as a turbine engine component. As discussed above, the use of nanoparticle alloys allows large cracks to be repaired while retaining isothermal solidification during the brazing operation. Accordingly, method 10 is suitable for sealing cracks (e.g., crack 24) having maximum gap widths up to about 2,000 micrometers (about 75 mils), and is particularly suitable for sealing cracks having maximum gap widths ranging from about 250 micrometers (about 10 mils) to about 1,000 micrometers (about 40 mil). Pursuant to step 12 of method 10, metal component 20 is initially cleaned to remove any oxide layers that may have formed on surface 22 and walls 26.

As shown in FIG. 3, nanoparticle alloy 28 is then deposited into crack 24, pursuant to step 14 of method 10. The small particle sizes of nanoparticle alloy 28 allow the alloy particles to flow into the narrow regions between walls 26. This allows crack 24 to be substantially filled with nanoparticle alloy 28, as shown.

As shown in FIG. 4, filler alloy 30 is then deposited over nanoparticle alloy 28 and crack 24 (and over a portion of surface 22), pursuant to step 16 of method 10. A diffusion brazing cycle is then performed, pursuant to step 18 of method 10. This melts nanoparticle alloy 28 and filler alloy 30, thereby allowing nanoparticle alloy 28 and filler alloy 30 to interdiffuse and to diffuse into walls 26. The portion of filler alloy 30 that is disposed over surface 22 also diffuses into surface 22. As metal component 20 is subsequently cooled, nanoparticle alloy 28 and filler alloy 30 isothermally solidify within crack 24, thereby forming a strong seal.

FIG. 5 shows metal component 20 after crack 24 is sealed with nanoparticle alloy 28 and filler alloy 30. The resulting brazed weld 32 provides a strong seal within crack 26 that substantially preserves the mechanical properties of metal component 20. Walls 26 and portions of surface 22 are shown with broken lines to illustrate the diffusion of nanoparticle alloy 28 and filler alloy 30 with the alloy of metal component 20 at walls 26 and surface 22.

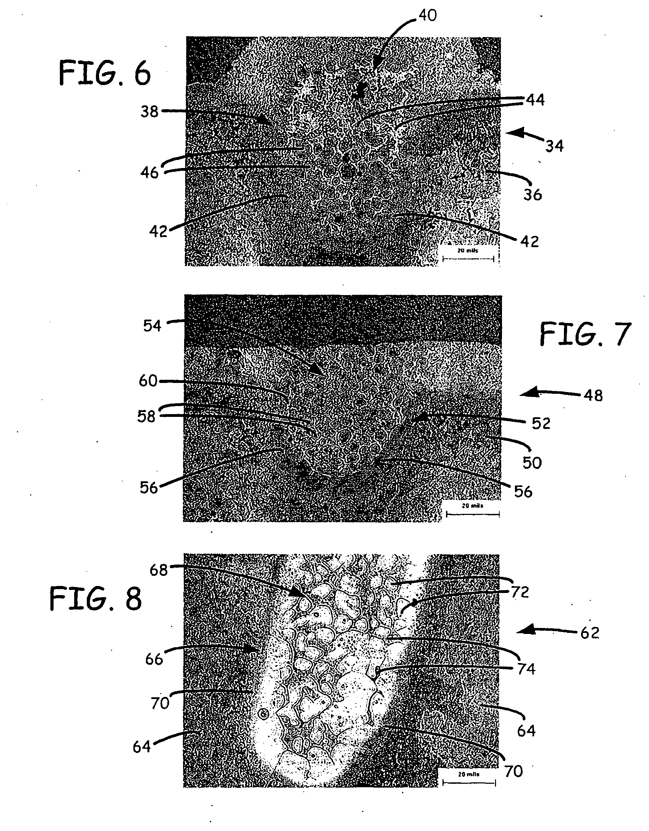

FIGS. 6-8 are micrographs of metal components formed with brazing operations. FIG. 6 shows metal component 34, which is a comparative brazed metal component that includes base portion 36, crack 38, and brazed weld 40. The base alloy of base portion 36 was a nickel-based alloy (AISI Standard MAR-M-247), and the brazing alloy of brazed weld 40 was a blend of 40% by weight of a PWA 36117-1 nickel-based alloy and 60% by weight of a PWA 36117-2 nickel-based alloy. As shown, crack 38 had a gap width of 1.2 millimeters (47 mils), and includes walls 42, which contained a mixture of the brazing alloy of brazed weld 40 diffused into the base alloy of base portion 36. In contrast to metal components of the present invention, metal component 34 did not include a nanoparticle alloy.

The brazing operation involved vacuum brazing metal component 34 in a vacuum furnace at 1200°C (2200°F). Upon cooling, the brazing alloy of brazed weld 40 solidified atheramally, which formed brittle phases (e.g., phases 44) combined with the alloy particles (e.g., particles 46). The brittle phases were weak portions of brazed weld 40, which correspondingly reduced the mechanical properties of metal component 34 at crack 38.

FIG. 7 shows metal component 48, which is a brazed metal component of the present invention that includes base portion 50, crack 52, and brazed weld 54. The base alloy of base portion 50 was a nickel-based alloy (AISI Standard MAR-M-247), and the alloy of brazed weld 54 was a mixture of a nickel nanoparticle powder and a filler alloy (a blend of 40% by weight of a PWA 36117-1 nickel-based alloy and 60% by weight of a PWA 36117-2 nickel-based alloy). As shown, crack 52 had a gap width of 1.17 millimeters (46 mils), and includes walls 56, which contained a mixture of the alloy of brazed weld 54 diffused into the base alloy of base portion 50.

The brazing operation was performed pursuant to method 10 (shown in FIG. 1), where the nickel nanoparticle powder was deposited into crack 52, and the filler alloy was then deposited over the nickel nanoparticle powder. Metal component 48 was then vacuum brazed in a vacuum furnace at 1200°C (2200°F). Upon cooling, the alloy of brazed weld 54 solidified isothermally, where the particles of the filler alloy (e.g. particles 58) interdiffused with the nickel nanoparticles (e.g., portion 60). This interdiffusion between the nickel nanoparticles and the filler alloy, and with the base alloy of base portion 48 (at walls 56), provided a mechanically-strong seal at crack 52, thereby substantially preserving the mechanical properties of metal component 48.

FIG. 8 shows metal component 62, which is a brazed metal component of the present invention that includes base portion 64, crack 66, and brazed weld 68. The base alloy of base portion 64 was a nickel-based alloy (Pratt & Whitney PWA 1447 Specification, AISI Standard MAR-M-247), and the alloy of brazed weld 68 was a mixture of a nickel nanofoil and a filler alloy. The filler alloy was a blend of 40% by weight of a first nickel-based alloy (Pratt & Whitney PWA 36117-1 Specification) and 60% by weight of a second nickel-based alloy (Pratt & Whitney PWA 36117-2 Specification, AISI Standard MAR-M-247). As shown, crack 66 had a gap width greater than 1 millimeter (40 mils), and includes walls 70, which contained a mixture of the alloy of brazed weld 68 diffused into the base alloy of base portion 64.

The brazing operation was performed pursuant to method 10 (shown in FIG. 1), where the nickel nanofoil was deposited into crack 66, and the filler alloy was then deposited over the nickel nanofoil. Metal component 62 was then vacuum brazed in a vacuum furnace at 1200°C (2200°F). Upon cooling, the alloy of brazed weld 68 solidified isothermally, where the particles of the filler alloy (e.g. particles 72) interdiffused with the nickel nanoparticles of the nanofoil (e.g., portion 74). This interdiffusion between the nickel nanoparticles and the filler alloy, and with the base alloy of base portion 64 (at walls 70), provided a mechanically-strong seal at crack 66, thereby substantially preserving the mechanical properties of metal component 62.

Although the present invention has been described with reference to preferred embodiments, workers skilled in the art will recognize that changes may be made in form and detail without departing from the scope of the invention.

## Claims

1. A method of repairing a metal component (20) having a crack (24), the method comprising:
depositing a nanoparticle alloy (28) within the crack (24);
depositing a filler alloy (30) over the deposited nanoparticle alloy (28); and
diffusion brazing the metal component (20).

2. The method of claim 1, wherein the nanoparticle alloy (28) has an average particle size of about 500 nanometers or less.

3. The method of claim 1, wherein the average particle size of the nanoparticle alloy (28) ranges from about 10 nanometers to about 200 nanometers.

4. The method of claim 1, 2 or 3, wherein the diffusion brazing comprises:
melting the nanoparticle alloy (28) and the filler alloy (30); and
isothermally solidifying at least a portion of the melted nanoparticle alloy (28) and at least a portion of the melted filler alloy (30) within the crack (24).

5. The method of any preceding claim, further comprising cleaning the crack of the metal part to remove an oxide layer from the crack.

6. A method of repairing a metal component (20) having a crack (24), the method comprising:
depositing a first alloy (28) within the crack (24), the first alloy (28) having an average particle size of about 500 nanometers or less;
depositing a second alloy (30) over the deposited first alloy (28);
heating the metal component (20) to a temperature ranging from about 980°C to about 1260°C; and
isothermally solidifying at least a portion of the first alloy (28) and at least a portion of the second alloy (30) within the crack (24).

7. The method of claim 6, wherein the average particle size of the first alloy (28) ranges from about 10 nanometers to about 200 nanometers.

8. The method of claim 6 or 7, wherein the first alloy (28) is substantially free of particles having particle sizes greater than about 500 nanometers.

9. The method of claim 6, 7 or 8, wherein the temperature that the metal component (20) is heated to ranges from about 1150°C to about 1260°C.

10. A method of repairing a turbine engine component (20) having a crack (24), the method comprising:
depositing a first alloy (28) within the crack (24), the first alloy (28) having an average particle size of about 500 nanometers or less;
depositing a second alloy (30) over the first alloy (28) and onto a surface (22) of the turbine engine component (20); and
diffusion brazing the turbine engine component (20).

11. The method of claim 10, wherein the average particle size of the first alloy (28) ranges from about 10 nanometers to about 200 nanometers.

12. The method of claim 10 or 11, wherein the diffusion brazing comprises heating the turbine engine component (20) to a temperature ranging from about 980°C to about 1260°C.

13. The method of claim 12, wherein the temperature that the turbine engine component (20) is heated to ranges from about 1150°C to about 1260°C.

14. The method of any of claims 10 to 13, wherein the diffusion brazing comprises:
melting the first alloy (28) and the second alloy (30); and
isothermally solidifying at least a portion of the melted first alloy (28) and at least a portion of the melted second alloy (30) within the crack (24).

15. The method of any preceding claim, wherein the crack (24) has a maximum gap width ranging from about 250 micrometers to about 1,000 micrometers.

16. The method of any preceding claim, wherein the first or nanoparticle alloy (28) comprises an alloy selected from the group consisting of a nickel-based alloy, a nickel-based superalloy, a cobalt-based alloy, a cobalt-based superalloy, and combinations thereof.

17. The method of claim 15, wherein the first or nanoparticle alloy (28) further comprises a metal selected from the group consisting of titanium, chromium, niobium, hafnium, tantalum, molybdenum, tungsten, aluminum, iron, and combinations thereof.

18. The method of any preceding claim, wherein the second or filler alloy (30) comprises an alloy selected from the group consisting of a nickel-based alloy, a nickel-based superalloy, a cobalt-based alloy, a cobalt-based superalloy, and combinations thereof.
